# EUROPEAN PATENT APPLICATION

(11) **EP 2 166 471 A1**
(43) Date of publication of application: **24.03.2010**
(21) Application number: 08300262.6
(22) Date of filing: 27.08.2008
(51) Int. Cl.: G06F 21/00

(54) **Method and apparatus for storing and verifying data**

(71) Applicant: HEWLETT-PACKARD DEVELOPMENT COMPANY, L.P., Houston, TX 77070 (US)
(72) Inventor: Hyerle, Robert, 38053, Grenoble Cedex 09 (FR)
(74) Representative: Franks, Adam Peter

(57) **Abstract**

Embodiments of the present invention provide a method of storing data, comprising: updating a counter, and storing data and a value of the updated counter together in encrypted form; and a method of verifying data, comprising decrypting stored data to recover a data element value, and comparing the data element value against a counter to verify the stored data.

## Description

### Background

Frequently, it is desired to share data between a group of users. However, it is difficult to ensure one or more of integrity, authenticity, currency or privacy of a shared data store.

For example, if a shared store does not authenticate users or support access control, then any client with network access to the shared data store may perform read or write actions upon the data store. In this case, integrity and authenticity of data in the store may not be assumed. A trusted group of clients may share a secret encryption key, or set of keys, with which data in the store is encrypted. However, an attacker may still read the encrypted data and write encrypted data back to the store at a later time. A member of the trusted group would still find the data to be authentic i.e. created by a member of the trusted group, but the data would not be current. That is, the data would not represent data most recently written to the data store by a member of the trusted group. Thus, a problem has been noted in that shared data stores are vulnerable to playback attacks in which an attacker writes previous data to the data store.

It is an object of embodiments of the invention to at least mitigate one or more of the problems of the prior art.

### Brief Description of the Drawings

Embodiments of the invention will now be described by way of example only, with reference to the accompanying figures, in which:
Figure 1 shows a block schematic diagram of an embodiment of a data store according to the present invention;
Figure 2 shows example processing steps of a method of writing data to the data store according to an embodiment of the present invention;
Figure 3 shows example processing steps of a method of reading and verifying data from the data store according to an embodiment of the present invention; and
Figure 4 shows a block diagram representing an example apparatus according to an embodiment of the present invention.

### Detailed Description of Embodiments of the Invention

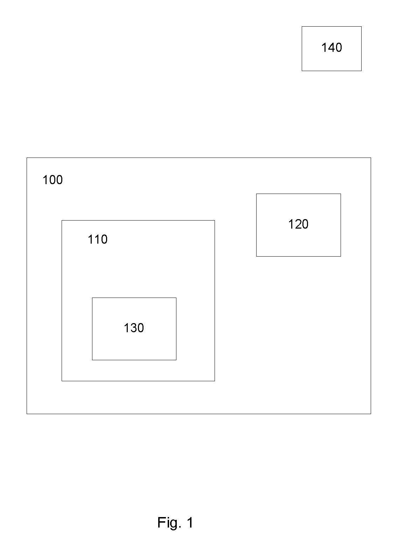

Figure 1 shows an embodiment of a data store 100. The data store 100 comprises data 110 and a counter 120. The data 110 comprises a data element 130 storing a value of the counter 120 at a predetermined time. The data 110 and data element 130 are encrypted or signed using an encryption key 140, as will be explained.

The counter 120 is a data element storing one of a plurality of permissible values. Any scheme or rule for choosing the permissible data values may be used. However, all members of the trusted group must be able to calculate, or know in advance, a sequence of values which the counter 120 will store. In other words, the sequence of values should have an order relation so that, given two values, a member of the trusted group can determine which value appears later in the sequence. Each of the sequence of values should be unique, that is, each value should appear only once in the sequence.

Two permissible actions may be performed upon the counter 120: read and next. A read operation returns a current value stored by the counter 120. A next operation causes the counter 120 to store the next value in the sequence. Thus, by members of the trusted group performing successive next operations, the value stored by the counter 120 progresses through the sequence of permissible values. A value of the counter 120 may not otherwise be changed by users.

Performing a next operation upon the counter 120 in the described embodiment causes the counter value to be incremented monotonically. However, it will be realised that other embodiments are possible, such as the counter value being incremented by another number, or being decremented monotonically, or by another number. The next operation may also be known as a write operation.

The data element 130 is used to store a value of the counter 120 when new data 110 is written to the data store 100. This enables a comparison of values stored by the data element 130 and the counter 120 to determine if the data 110 has been subject to a playback attack.

The data 110 and data element 130 are stored together. In one embodiment, the data 110 and data element 130 are encrypted together to ensure that the data 110 and value of data element 130 are private to members of the trusted group. However, in another embodiment the data 110 and data element 130 are encrypted, or signed, by a secret key, which does not ensure privacy of the data 110 and data element 130 but allows the authenticity of the data 110 and data element to be verified by decryption with a public key.

The encryption key 140 may be a shared private key, a shared private/public key pair or a more elaborate combination such as each member of the trusted group having a private key to sign data 110 and data element 130 and a private key for encryption, with a public key for verifying the signature being publicly available. It will be realised that other variants or combinations of keys and/or key pairs may be used which allow the authenticity of the data 110 and data element 130 to be ensured.

Methods of reading and writing data to the data store 100 and verifying the authenticity of the data 110 will now be described.

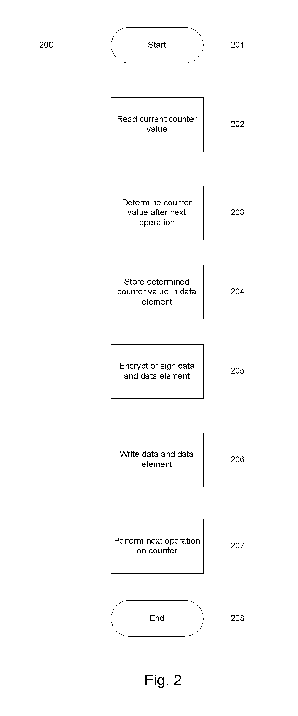

Figure 2 shows an embodiment of process steps for writing data to the data store 100 by a member of the trusted group having a shared key 140.

The method begins with step 201. In step 202 a read operation is performed upon the counter 120 by a member of the trusted group wishing to write data 110 to the data store 100. The member of the trusted group obtains a current value of the counter 120. In step 203, a value of the counter 120 following a next operation having been performed upon the counter 120 is determined. That is, in step 203 of the described embodiment the value of the counter 120 incremented by one is determined. In step 204, the determined counter value is stored in the data element 130. That is, the value of the counter 120 following the next operation is stored in the data element 130 in step 204. Data 110 and the data element 130 stored with the data 110 are then encrypted or signed together using the encryption key 140 in step 205. In step 206, the data 110 and data element 130 are written to the data store 100. In step 207, a next operation is performed upon the counter 120, which causes the value of the counter 120 to equal that of the data element 130. The method ends in step 208.

It will be realised that various changes to the above-described method are possible which do not affect the operation of the present invention. For example, a next operation may be performed upon the counter 120 in step 202 and the value of the updated counter 120 then read in step 203. This still results in the value of the counter 120 following the next operation being known in step 204 for storage in the data element 130. In this case, it would not be necessary to perform the next operation upon the counter 120 in step 207. In another example, the writing of the data 110 and the data element 130 in step 206 may be combined with the step of performing a next operation upon the counter 120 in step 207 as a single unitary operation. In all cases, the result is that the data element 130 stores a new value of the counter 120. The data 110 and data element 130 may be encrypted together using a public key or a shared private key. Alternatively, the data 110 and data element 130 may be signed using a private key which allows the signature to be checked using a public key. In a still further embodiment, the data 110 and data element 130 may be signed and encrypted using a combination of keys.

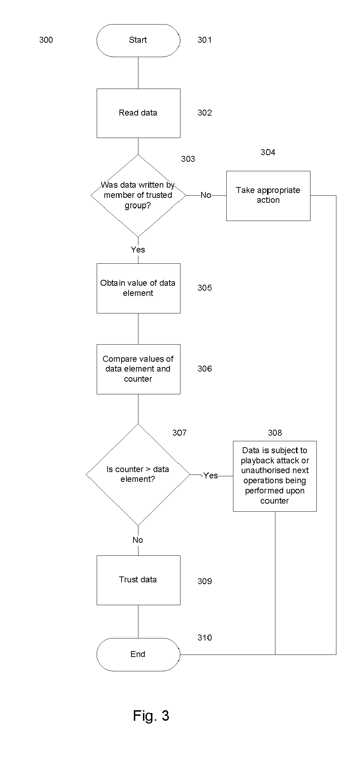

A method of reading data 110 from the data store 100 and verifying its authenticity will now be described with reference to Figure 3. In particular, the method determines that the data 110 was written by a member of the trusted group and it has not been subject to a playback attack.

The method of reading and verifying data 110 begins in step 301. In step 302, the data 110 and data element 130 are read. In step 303 it is determined whether the data 110 was written by a member of the trusted group. This may be performed by decryption with a secret or public key 140 depending on the key system used. If it is determined in step 303 that the data 110 and data element 130 held in the store 100 were not written by a member of the trusted group, appropriate action is taken in step 304. Alternatively, if it is determined in step 303 that the data 110 and data element 130 were written by a member of the trusted group, the data element 130 stored with the data 110 is obtained in step 305. The data element 130 is obtained by decrypting the data 110 and data element 130. In a case that the data 110 and data element 130 are encrypted using a private key or public key of a public/private key pair 140, a private key is used for decryption. In a case that the data 110 and data element 130 are signed by encryption with a private key of a public/private key pair, then a public key is used to verify the signature. In step 306 the value of the data element 130 is compared against a read value of the counter 120. In step 307 it is determined if the counter 120 value is greater than that stored in the data element 130, which would indicate that the data 110 has been subject to a playback attack, as in step 308. In some cases, it may be acceptable to trust the data 110 to a limited extent if the value of the counter 120 is greater than the data element 130. The extent to which the data 110 may be trusted is determined by a magnitude of the difference between the values of the counter 120 and the data element 130 since this indicates how "old" the data 110 is which has been played back. If, however, the value of the counter 120 equals the value of the data element 130 then the data 110 is to be trusted in step 309 and the method ends in step 310.

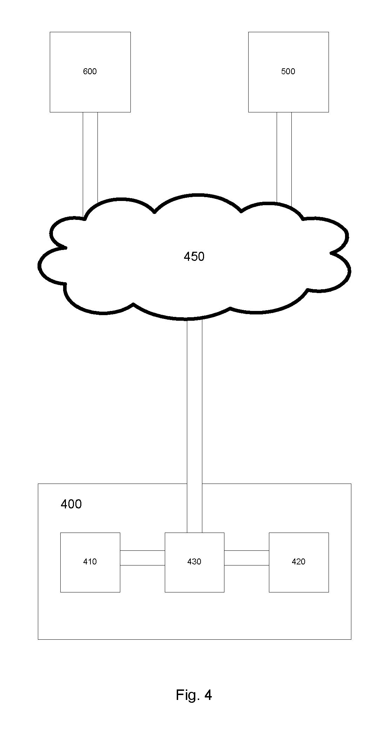

An apparatus according to an embodiment of the present invention arranged to implement the above methods will now be described with reference to Figure 4.

The apparatus 400 comprises a processor 410, a data storage device 420 operatively connected to the processor 410 to store data, and a network interface 430. The data storage device 420 may be a volatile or non-volatile memory, such as RAM and ROM respectively, a magnetic data storage device such as a hard disk, or may be an optical data storage device, such as a DVD drive or the like. The apparatus 400 is connected a communications network 450 which may be a local area network (LAN) or a wide area network (WAN), such as the Internet. The network interface 430 allows the apparatus 400 to exchange, which is to transmit and receive, data with the communications network 450. The network interface 430 may be wired, such as an Ethernet interface, or wireless, such as Bluetooth, GPRS, WiFi, 3G or the like.

Operatively connected to the communications network 450 is a data storage device 500 which hosts the data store 100, and is shared with at least one other apparatus 600 connected to the communications network 450. The at least one other apparatus may have like parts to that of apparatus 400. Alternatively, the data storage device 500 may form part of an apparatus 600 connected to the network 450.

All apparatus 400, 600 belonging to the trusted group share a key 140, or a plurality of keys as appropriate, which may be used to encrypt and decrypt data 110 to be shared amongst members of the trusted group. The key 140 is operatively stored in the memory device 430. The processor 410 is operatively connected via the network interface and communications network 450 to the data storage device 500 to receive the data 110, including data element 130 and to perform read or next operations upon the counter 120. In use, the apparatus 400, writes data 110 to the data store 100 hosted upon the data storage device 500, utilising the method described above with reference to Figure 2. The apparatus reads data 110, previously stored by itself or another apparatus 600, from the data store 100 and verifies the data 110 using the method described above with reference to Figure 3.

Advantageously, embodiments of the present invention do not require access control to a data store. The data 110 and counter 120 may be read by any device capable of connecting to the data store 100. Therefore, changes to standard APIs are not required. Further, embodiments of the present invention do not rely on access to a network to which the data store is connected being controlled, which is difficult to ensure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of verifying data (110), comprising:
decrypting stored data (110) to recover a data element (130) value; and
comparing the data element (130) value against a counter (120) to verify the stored data (110).

2. The method according to claim 1, wherein the stored data (110) is decrypted with a private key shared between members of a trusted group.

3. The method according to claim 1 or 2, comprising determining if the data (110) was written by a member of the trusted group with reference to the private key.

4. The method according to claim 1, 2 or 3, wherein the stored data (110) is decrypted with a public key.

5. The method according to claim any preceding claim, wherein the stored data (110) is determined to be compromised if the data element (130) value is less than the counter (120) value.

6. The method according to claim any preceding claim, wherein the stored data (110) is verified when the counter (120) value and the data element (130) value are equal.

7. The method of any preceding claim, comprising:
updating the counter (120); and
storing the data (110) and a value of the updated counter (120) as the data element (130) together in encrypted form.

8. The method according to claim 7, comprising reading a value of the counter (120) and determining the value of the updated counter (120).

9. The method of claim 7 or 8, comprising encrypting the data (110) and value of the updated counter (120) with a private encryption key or a public encryption key of a private/public encryption key pair.

10. The method of any of claims 7, 8 or 9, comprising accessing a data storage device (500) connected to a network (450) to store the data (110).

11. An apparatus (400), comprising:
processing means (410) arranged to read a counter (120) value, encrypt data (110) including an updated counter (120) value, and to store the encrypted data;
wherein the processing means (410) is arranged to verify the stored data (110) by comparing a data value (130), obtained from decrypting the data, against the counter (120).

12. The apparatus according to claim 11, comprising:
a network interface (430) for accessing a communications network (450), wherein the data (110) is stored in a data storage device (500) connected to the communications network (450).

13. The apparatus according to claim 11 or 12, comprising a memory (420) arranged to store a shared key, wherein the processing means (410) is arranged to decrypt the data (110) to obtain the data value using the shared key.

14. The apparatus according to claim 13, wherein the memory stores a shared private key and the processing means (410) is arranged to encrypt the data (110) using the private key.

15. The apparatus according to claim 13, wherein the memory (420) stores a public key and the processing means (410) is arranged to encrypt the data (110) using the public key.
